(19) Europäisches Patentamt
European Patent Office
Office européen des brevets

(11) **EP 3 582 572 A1**

(12) **EUROPEAN PATENT APPLICATION**
published in accordance with Art. 153(4) EPC

(43) Date of publication:
**18.12.2019 Bulletin 2019/51**

(51) Int Cl.:
*H04W 72/12* (2009.01)    *H04W 56/00* (2009.01)

(21) Application number: **18751714.9**

(86) International application number:
**PCT/KR2018/001744**

(22) Date of filing: **09.02.2018**

(87) International publication number:
**WO 2018/147672 (16.08.2018 Gazette 2018/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **09.02.2017  US 201762457067 P**

(71) Applicant: **LG Electronics Inc.**
**Seoul 07336 (KR)**

(72) Inventors:
• **PARK, Changhwan**
  **Seoul 06772 (KR)**

• **YI, Yunjung**
  **Seoul 06772 (KR)**
• **KIM, Seonwook**
  **Seoul 06772 (KR)**
• **SEO, Hanbyul**
  **Seoul 06772 (KR)**
• **YOON, Sukhyon**
  **Seoul 06772 (KR)**
• **AHN, Joonkui**
  **Seoul 06772 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **METHOD FOR TRANSMITTING AND RECEIVING UPLINK SIGNAL BETWEEN TERMINAL AND BASE STATION IN WIRELESS COMMUNICATION SYSTEM AND DEVICE FOR SUPPORTING SAME**

(57)    The present disclosure relates to a wireless communication system, and disclosed are a method for transmitting and receiving an uplink signal for a first system and a second system to which numerologies determined independently of each other are applied, and a device for supporting same. More specifically, disclosed is a method for transmitting and receiving an uplink signal between a terminal and a base station in cases when a system in which a timing adjustment or timing advance (TA) command message is transmitted and a system in which an uplink signal to which the TA command is applied is transmitted are different.

FIG. 14

**Description**

**TECHNICAL FIELD**

The present disclosure relates to a wireless communication system, and more particularly, to a method of transmitting and receiving an uplink signal in first and second systems to which independent numerologies are applied and device for supporting the same.

More specifically, the present disclosure provides a method of transmitting and receiving an uplink signal between a terminal and a base station when a system for transmitting a timing adjustment or timing advance (TA) command message is different from a system for transmitting an uplink signal to which the TA command is applied.

**BACKGROUND ART**

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

As described above, the introduction of the next generation RAT considering the enhanced mobile broadband communication, massive MTC, Ultra-reliable and low latency communication (URLLC), and the like has been discussed.

**DISCLOSURE**

**TECHNICAL PROBLEM**

The object of the present disclosure is to provide a method of transmitting and receiving an uplink signal between a terminal and a base station in a newly proposed communication system.

Specifically, the object of the present disclosure is to provide a method of transmitting and receiving an uplink signal between a terminal and a base station when a system for transmitting a TA command message is different from a system for transmitting an uplink signal to which the TA command is applied.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present disclosure provides methods of transmitting and receiving an uplink signal between a terminal (user equipment) and a base station in a wireless communication system and devices therefor.

In an aspect of the present disclosure, provided herein is a method of receiving an uplink signal from a user equipment (UE) by a base station in a wireless communication system. The method may include: transmitting an uplink timing advance command to the UE in a first system to which a first numerology is applied; transmitting information for scheduling uplink transmission in a second system to which a second numerology is applied and an uplink timing adjustment parameter for the uplink timing advance command in the second system to the UE in the first system to which the first numerology is applied; and receiving a first uplink signal of which a timing is adjusted by a time obtained by applying the uplink adjustment parameter for the uplink timing advance command from the UE in the second system to which the second numerology is applied.

In another aspect of the present disclosure, provided herein is a method of transmitting an uplink signal to a base station by a user equipment (UE) in a wireless communication system. The method may include: receiving an uplink timing advance command from the base station in a first system to which a first numerology is applied; receiving information for scheduling uplink transmission in a second system to which a second numerology is applied and an uplink timing adjustment parameter for the uplink timing advance command in the second system from the base station

in the first system to which the first numerology is applied; and transmitting a first uplink signal of which a timing is adjusted by a time obtained by applying the uplink adjustment parameter for the uplink timing advance command to the base station in the second system to which the second numerology is applied.

In still another aspect of the present disclosure, provided herein is a base station for receiving an uplink signal from a user equipment (UE) in a wireless communication system. The base station may include: a transmitter; a receiver; and a processor connected to the transmitter and the receiver. The processor may be configured to: transmit an uplink timing advance command to the UE in a first system to which a first numerology is applied; transmit information for scheduling uplink transmission in a second system to which a second numerology is applied and an uplink timing adjustment parameter for the uplink timing advance command in the second system to the UE in the first system to which the first numerology is applied; and receive a first uplink signal of which a timing is adjusted by a time obtained by applying the uplink adjustment parameter for the uplink timing advance command from the UE in the second system to which the second numerology is applied.

In a further aspect of the present disclosure, provided herein is a user equipment (UE) for transmitting an uplink signal to a base station in a wireless communication system. The UE may include: a transmitter; a receiver; and a processor connected to the transmitter and the receiver. The processor may be configured to: receive an uplink timing advance command from the base station in a first system to which a first numerology is applied; receive information for scheduling uplink transmission in a second system to which a second numerology is applied and an uplink timing adjustment parameter for the uplink timing advance command in the second system from the base station in the first system to which the first numerology is applied; and transmit a first uplink signal of which a timing is adjusted by a time obtained by applying the uplink adjustment parameter for the uplink timing advance command to the base station in the second system to which the second numerology is applied.

The uplink timing advance command may be transmitted in a medium access control (MAC) message.

The information for scheduling the uplink transmission in the second system and the uplink timing adjustment parameter for the uplink timing advance command in the second system may be transmitted in downlink control information (DCI).

The time obtained by applying the uplink adjustment parameter for the uplink timing advance command may correspond to a time indicated by a sum of first time information obtained by applying the uplink timing advance command to the first system and second time information obtained by applying the uplink timing advance command to the second system.

Alternatively, the time obtained by applying the uplink adjustment parameter for the uplink timing advance command may correspond to a time determined by a multiplication of time information obtained by applying the uplink timing advance command to the first system and information indicated by the uplink timing adjustment parameter.

The base station may further receive a second uplink signal from the UE in the first system. In this case, the uplink timing advance command may include an uplink timing advance value determined based on the second uplink signal.

The second uplink signal may correspond to one of a sounding reference signal, a physical uplink control channel (PUCCH) signal, and a physical uplink shared channel (PUSCH) signal.

The first numerology may be different from the second numerology.

The first system may be a new radio access technology (new RAT or NR) system, and the second system may be a long term evolution (LTE) system.

It is to be understood that both the foregoing general description and the following detailed description of the present disclosure are exemplary and explanatory and are intended to provide further explanation of the disclosure as claimed.

## ADVANTAGEOUS EFFECTS

As is apparent from the above description, the embodiments of the present disclosure have the following effects.

According to the present disclosure, a BS can use signals and channels of a system (e.g., LTE system) rather than those of the NR system for efficient operation of a NR UE in an environment in which different systems (e.g., NR system, LTE system, etc.) coexist.

For example, the BS may schedule UL transmission on an LTE carrier for the NR UE, and the NR UE can apply a TA adjustment method proposed in the present disclosure when performing the UL transmission on the LTE carrier

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## DESCRIPTION OF DRAWINGS

The accompanying drawings, which are included to provide a further understanding of the invention, provide embodiments of the present disclosure together with detail explanation. Yet, a technical characteristic of the present disclosure is not limited to a specific drawing. Characteristics disclosed in each of the drawings are combined with each other to configure a new embodiment. Reference numerals in each drawing correspond to structural elements.

FIG. 1 is a diagram illustrating physical channels and a signal transmission method using the physical channels;
FIG. 2 is a diagram illustrating exemplary radio frame structures;
FIG. 3 is a diagram illustrating an exemplary resource grid for the duration of a downlink slot;
FIG. 4 is a diagram illustrating an exemplary structure of an uplink subframe;
FIG. 5 is a diagram illustrating an exemplary structure of a downlink subframe;
FIG. 6 is a diagram illustrating a self-contained subframe structure applicable to the present disclosure;
FIGs. 7 and 8 are diagrams illustrating representative methods for connecting TXRUs to antenna elements;
FIG. 9 is a diagram schematically illustrating an exemplary hybrid beamforming structure from the perspective of transceiver units (TXRUs) and physical antennas according to the present disclosure;
FIG. 10 is a diagram schematically illustrating an exemplary beam sweeping operation for a synchronization signal and system information in a downlink transmission procedure according to the present disclosure;
FIG. 11 is a diagram illustrating a scenario in which LTE and NR services are provided;
FIG. 12 is a diagram illustrating three blank resource configurations for individual scenarios;
FIG. 13 is a diagram schematically illustrating a signal capable of being used by a NR UE in one RB when LTE and NR use the same numerology;
FIG. 14 is a diagram schematically illustrating a method of transmitting a UL signal between a UE and a BS applicable to the present disclosure; and
FIG. 15 is a diagram illustrating the configurations of a UE and a BS for implementing the proposed embodiments.

## MODE FOR CARRYING OUT THE INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the attached drawings, a detailed description of known procedures or steps of the present disclosure will be avoided lest it should obscure the subject matter of the present disclosure. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmission end is a fixed and/or mobile node that provides a data service or a voice service and a reception end is a fixed and/or mobile node that receives a data service or a voice service. Therefore, a UE may serve as a transmission end and a BS may serve as a reception end, on an UpLink (UL). Likewise, the UE may serve as a reception end and the BS may serve as a transmission end, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331. That is, the steps or parts, which are not described to clearly reveal the technical idea of the present disclosure, in the embodiments of the present disclosure may be explained by the above standard specifications. All terms used in the embodiments of the present disclosure may be explained by the standard specifications.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

For example, the term, TxOP may be used interchangeably with transmission period or Reserved Resource Period (RRP) in the same sense. Further, a Listen-Before-Talk (LBT) procedure may be performed for the same purpose as a carrier sensing procedure for determining whether a channel state is idle or busy, CCA (Clear Channel Assessment), CAP (Channel Access Procedure).

Hereinafter, 3GPP LTE/LTE-A systems are explained, which are examples of wireless access systems.

The embodiments of the present disclosure can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present disclosure are described in the context of a 3GPP LTE/LTE-A system in order to clarify the technical features of the present disclosure, the present disclosure is also applicable to an IEEE 802.16e/m system, etc.

## 1. 3GPP LTE/LTE-A System

### 1.1. Physical Channels and Signal Transmission and Reception Method Using the Same

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

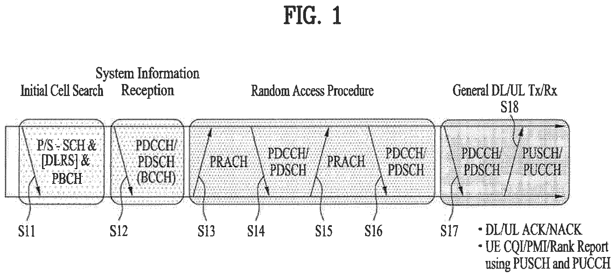

FIG. 1 illustrates physical channels and a general signal transmission method using the physical channels, which may be used in embodiments of the present disclosure.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB.

During the initial cell search, the UE may monitor a DL channel state by receiving a DL Reference Signal (RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the eNB (S17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

## 1.2. Resource Structure

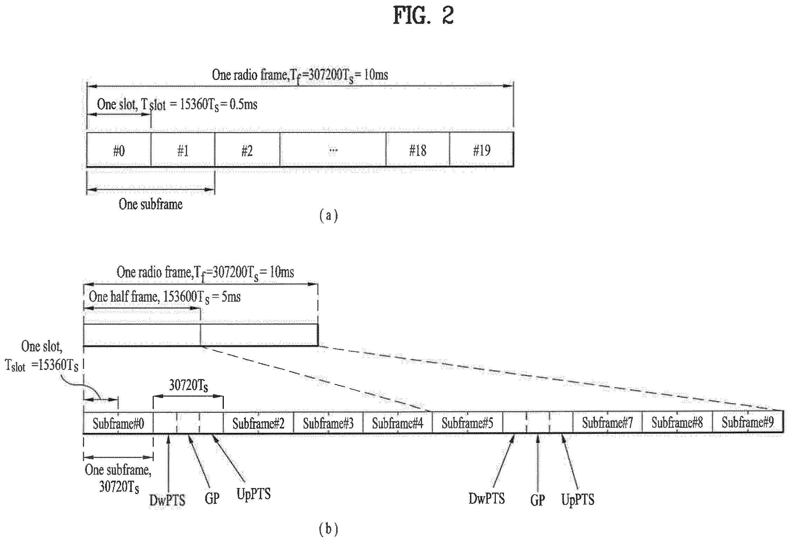

FIG. 2 illustrates exemplary radio frame structures used in embodiments of the present disclosure.

FIG. 2(a) illustrates frame structure type 1. Frame structure type 1 is applicable to both a full Frequency Division Duplex (FDD) system and a half FDD system.

One radio frame is 10ms (Tf=307200·Ts) long, including equal-sized 20 slots indexed from 0 to 19. Each slot is 0.5ms (Tslot=15360·Ts) long. One subframe includes two successive slots. An ith subframe includes 2ith and (2i+1)th slots. That is, a radio frame includes 10 subframes. A time required for transmitting one subframe is defined as a Transmission Time Interval (TTI). Ts is a sampling time given as Ts=1/(15kHzx2048)=3.2552x10-8 (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms (Tf=307200·Ts) long, including two half-frames each having a length of 5ms (=153600·Ts) long. Each half-frame includes five subframes each being 1ms (=30720·Ts) long. An ith subframe includes 2ith and (2i+1)th slots each having a length of 0.5ms (Tslot=15360·Ts). Ts is a sampling time given as Ts=1/(15kHzx2048)=3.2552x10-8 (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

Table 1 below lists special subframe configurations (DwPTS/GP/UpPTS lengths).

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4384 \cdot T_s$ | $5120 \cdot T_s$ | $20480 \cdot T_s$ | | |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

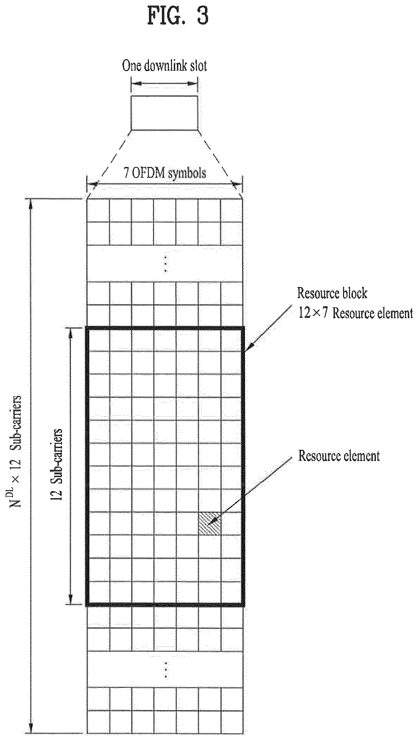

FIG. 3 illustrates an exemplary structure of a DL resource grid for the duration of one DL slot, which may be used in embodiments of the present disclosure.

Referring to FIG. 3, a DL slot includes a plurality of OFDM symbols in the time domain. One DL slot includes 7 OFDM symbols in the time domain and an RB includes 12 subcarriers in the frequency domain, to which the present disclosure is not limited.

Each element of the resource grid is referred to as a Resource Element (RE). An RB includes 12x7 REs. The number of RBs in a DL slot, NDL depends on a DL transmission bandwidth. The structure of the UL slot may be the same as the structure of the DL slot.

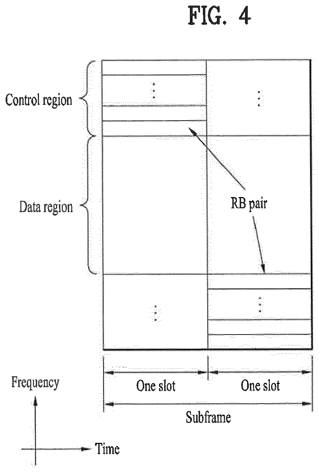

FIG. 4 illustrates a structure of a UL subframe which may be used in embodiments of the present disclosure.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe are allocated to a PUCCH for a UE. The RBs of the RB pair occupy different subcarriers in two slots. Thus, it is said that the RB pair frequency-hops over a slot boundary.

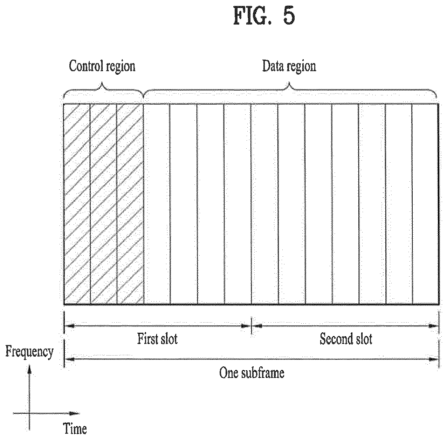

FIG. 5 illustrates a structure of a DL subframe that may be used in embodiments of the present disclosure.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e., the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

### 1.3. CSI Feedback

In the 3GPP LTE or LTE-A system, user equipment (UE) has been defined to report channel state information (CSI) to a base station (BS or eNB). Herein, the CSI refers to information indicating the quality of a radio channel (or link) formed between the UE and an antenna port.

For example, the CSI may include a rank indicator (RI), a precoding matrix indicator (PMI), and a channel quality indicator (CQI).

Here, RI denotes rank information about the corresponding channel, which means the number of streams that the UE receives through the same time-frequency resource. This value is determined depending on the channel's Long Term Fading. Subsequently, the RI may be fed back to the BS by the UE, usually at a longer periodic interval than the PMI or CQI.

The PMI is a value reflecting the characteristics of a channel space and indicates a precoding index preferred by the UE based on a metric such as SINR.

The CQI is a value indicating the strength of a channel, and generally refers to a reception SINR that can be obtained when the BS uses the PMI.

In the 3GPP LTE or LTE-A system, the base station may set a plurality of CSI processes for the UE and receive a report of the CSI for each process from the UE. Here, the CSI process is configured with a CSI-RS for specifying signal quality from the base station and a CSI-interference measurement (CSI-IM) resource for interference measurement.

### 1.4. RRM measurement

The LTE system supports Radio Resource Management (RRM) operation including power control, scheduling, cell search, cell reselection, handover, radio link or connection monitoring, and connection establishment/re-establishment. In this case, a serving cell may request a UE to send RRM measurement information, which contains measurement values for performing the RRM operation. As a representative example, in the LTE system, the UE may measure cell search information, Reference Signal Received Power (RSRP), Reference Signal Received Quality (RSRQ), etc. for each cell and then report the measured information. Specifically, in the LTE system, the UE receives 'measConfig' for the RRM measurement from the serving cell through a higher layer signal and then measure RSRP or RSRQ according to information in 'measConfig'.

In the LTE system, the RSRP, RSRQ, and RSSI has been defined as follows.

The RSRP is defined as the linear average over the power contributions (in [W]) of the resource elements that carry cell-specific RSs within the considered measurement frequency bandwidth. For example, for RSRP determination, the cell-specific RSs $R_0$ shall be used. For RSRP determination, the cell-specific RSs $R_0$ shall be used. If the UE can reliably detect that $R_1$ is available, it may use $R_1$ in addition to $R_0$ to determine RSRP.

The reference point for the RSRP shall be the antenna connector of the UE.

If receiver diversity is in use by the UE, the reported value shall not be lower than the corresponding RSRP of any of the individual diversity branches.

The RSRQ is defined as the ratio $N \times$RSRP/(E-UTRA carrier RSSI), where N is the number of RBs of the E-UTRA carrier RSSI measurement bandwidth. The measurements in the numerator and denominator shall be made over the same set of resource blocks.

The E-UTRA carrier RSSI comprises the linear average of the total received power (in [W]) observed only in OFDM symbols containing reference symbols for antenna port 0, in the measurement bandwidth, over N number of resource blocks by the UE from all sources, including co-channel serving and non-serving cells, adjacent channel interference, thermal noise etc. If higher-layer signaling indicates certain subframes for performing RSRQ measurements, then RSSI is measured over all OFDM symbols in the indicated subframes.

The reference point for the RSRQ shall be the antenna connector of the UE.

If receiver diversity is in use by the UE, the reported value shall not be lower than the corresponding RSRQ of any of the individual diversity branches.

The RSSI is defined as the received wide band power, including thermal noise and noise generated in the receiver, within the bandwidth defined by the receiver pulse shaping filter.

The reference point for the measurement shall be the antenna connector of the UE.

If receiver diversity is in use by the UE, the reported value shall not be lower than the corresponding UTRA carrier RSSI of any of the individual receive antenna branches.

Based on the above-described definitions, in the case of intra-frequency measurement, a UE operating in the LTE system may measure the RSRP in a bandwidth indicated by an allowed measurement bandwidth related information element (IE) transmitted in system information block type 3 (SIB3). Meanwhile, in the case of inter-frequency measurement, the UE may measure the RSRP in a bandwidth corresponding to one of 6, 15, 25, 50, 75, 100 resource blocks (RBs) indicated by an allowed measurement bandwidth related IE transmitted in SIB5. Alternatively, if there is no IE, the UE may measure the RSRP in the entire DL system frequency bandwidth as the default operation.

Upon receiving information on the allowed measurement bandwidth, the UE may regard the corresponding value as the maximum measurement bandwidth and then freely measure the RSRP value within the corresponding value. However, if the serving cell transmits an IE defined as WB-RSRQ to the UE and sets the allowed measurement bandwidth to be equal to or greater than 50 RBs, the UE should calculate the RSRP value for the entire allowed measurement bandwidth. Meanwhile, when intending to the RSSI, the UE measures the RSSI using a frequency band of the UE's receiver according to the definition of RSSI bandwidth.

## 2. New Radio Access Technology System

As more and more communication devices have required higher communication capacity, the necessity for the mobile broadband communication much improved than the existing radio access technology (RAT) has increased. In addition, massive machine type communications (MTC) capable of providing various services anytime and anywhere by connecting a number of devices or things has also been considered. Moreover, a communication system design capable of supporting services/UEs sensitive to reliability and latency has been proposed.

The introduction of new radio access technology considering the enhanced mobile broadband communication, massive MTC, ultra-reliable and low-latency communication (URLLC), etc. has been discussed. In the present disclosure, the corresponding technology is referred to as new RAT or new radio (NR) for simplicity.

### 2.1. Numeriologies

The NR system to which the present disclosure is applicable supports various OFDM numerologies as shown in Table 2 below. The value of μ and cyclic prefix information per carrier bandwidth part can be signaled for DL and UL, respectively. For example, the value of μ and cyclic prefix information for DL carrier bandwidth part may be signaled though higher layer signaling such as DL-BWP-mu and DL-MWP-cp. As another example, the value of μ and cyclic prefix information for UL carrier bandwidth part may be signaled though higher layer signaling such as UL-BWP-mu and UL-MWP-cp.

[Table 2]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

### 2.2. Frame Structure

DL and UL transmission are configured with frames each having a length of 10 ms. Each frame may include 10 subframes, each having a length of 1 ms. In this case, the number of consecutive OFDM symbols in each subframe is $N_{\text{symb}}^{\text{subframe},\mu} = N_{\text{symb}}^{\text{slot}} N_{\text{slot}}^{\text{subframe},\mu}$.

Each frame may include two half-frames with the same size. In this case, the two half-frames may include subframes 0 to 4 and subframes 5 to 9, respectively.

Regarding the subcarrier spacing μ, slots may be numbered within one subframe in ascending order as follows: $n_s^{\mu} \in \left\{ 0,...., N_{\text{slot}}^{\text{subframe},\mu} - 1 \right\}$ and may also be numbered within a frame in ascending order as follow: $n_{s,f}^{\mu} \in \left\{ 0,...., N_{\text{slot}}^{\text{frame},\mu} - 1 \right\}$. In this case, the number of consecutive OFDM symbols in one slot ($N_{\text{symb}}^{\text{slot}}$) may be determined as shown in Tables 3 and 4 below according to the cyclic prefix. The start slot ($n_s^{\mu}$) of a subframe is aligned with the start OFDM symbol ($n_s^{\mu} N_{\text{symb}}^{\text{slot}}$) of the corresponding subframe in the time domain. Table 3 shows the number of OFDM symbols in each slot/frame/subframe in the case of a normal cyclic prefix, and Table 4 shows the number of OFDM symbols in each slot/frame/subframe in the case of an extended cyclic prefix.

[Table 3]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

The NR system to which the present disclosure is applicable may employ a self-contained slot structure as the above-described slot structure.

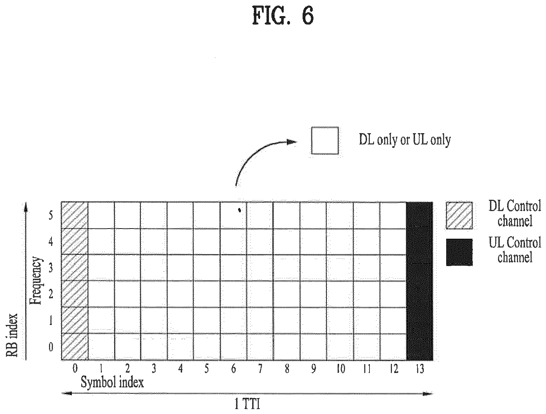

FIG. 6 is a diagram illustrating a self-contained subframe structure applicable to the present disclosure.

In FIG. 6, the hatched region (e.g., symbol index = 0) represents a DL control region, and the black region (e.g., symbol index = 13) represents an UL control region. The other region (e.g., symbol index = 1 to 12) may be used for DL data transmission or for UL data transmission.

Based on the self-contained slot structure, a BS and a UE may sequentially perform DL transmission and UL transmission in one slot. That is, the BS and the UE may transmit and receive not only DL data but also UL ACK/NACK for the DL data in one slot. The self-contained slot structure may reduce a time required for data retransmission when a data transmission error occurs, thereby minimizing the latency of the final data transmission.

In the self-contained slot structure, a time gap with a predetermined length is required to allow the BS and the UE to switch from transmission mode to reception mode or vice versa. To this end, some OFDM symbols at the time of switching from DL to UL may set as a guard period (GP).

Although it is described that the self-contained slot structure includes both the DL and UL control regions, these control regions may be selectively included in the self-contained slot structure. In other words, the self-contained slot structure according to the present disclosure may include either the DL control region or the UL control region as well as both the DL and UL control regions as shown in FIG. 6.

For example, a slot may have various slot formats. In this case, OFDM symbols in each slot can be classified into a DL symbol (denoted by 'D'), a flexible symbol (denoted by 'X'), and a UL symbol (denoted by 'U').

Thus, a UE may assume that DL transmission occurs only in symbols denoted by 'D' and 'X' in a DL slot. Similarly, the UE may assume that UL transmission occurs only in symbols denoted by 'U' and 'X' in a UL slot.

### 2.3. Analog Beamforming

In a millimeter wave (mmW) system, since a wavelength is short, a plurality of antenna elements can be installed in the same area. That is, considering that the wavelength at 30 GHz band is 1 cm, a total of 100 antenna elements can be installed in a 5 * 5 cm panel at intervals of 0.5 lambda (wavelength) in the case of a 2-dimensional array. Therefore, in the mmW system, it is possible to improve the coverage or throughput by increasing the beamforming (BF) gain using multiple antenna elements.

In this case, each antenna element can include a transceiver unit (TXRU) to enable adjustment of transmit power and phase per antenna element. By doing so, each antenna element can perform independent beamforming per frequency resource.

However, installing TXRUs in all of the about 100 antenna elements is less feasible in terms of cost. Therefore, a method of mapping a plurality of antenna elements to one TXRU and adjusting the direction of a beam using an analog phase shifter has been considered. However, this method is disadvantageous in that frequency selective beamforming is impossible because only one beam direction is generated over the full band.

To solve this problem, as an intermediate form of digital BF and analog BF, hybrid BF with B TXRUs that are fewer than Q antenna elements can be considered. In the case of the hybrid BF, the number of beam directions that can be transmitted at the same time is limited to B or less, which depends on how B TXRUs and Q antenna elements are connected.

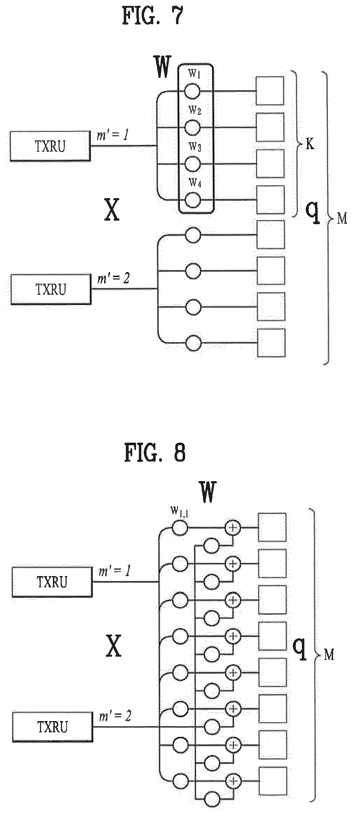

FIGs. 7 and 8 are diagrams illustrating representative methods for connecting TXRUs to antenna elements. Here, the TXRU virtualization model represents the relationship between TXRU output signals and antenna element output signals.

FIG. 7 shows a method for connecting TXRUs to sub-arrays. In FIG. 7, one antenna element is connected to one TXRU.

Meanwhile, FIG. 8 shows a method for connecting all TXRUs to all antenna elements. In FIG. 8, all antenna element are connected to all TXRUs. In this case, separate addition units are required to connect all antenna elements to all TXRUs as shown in FIG. 8.

In FIGs. 7 and 8, W indicates a phase vector weighted by an analog phase shifter. That is, W is a major parameter determining the direction of the analog beamforming. In this case, the mapping relationship between CSI-RS antenna ports and TXRUs may be 1:1 or 1-to-many.

The configuration shown in FIG. 7 has a disadvantage in that it is difficult to achieve beamforming focusing but has an advantage in that all antennas can be configured at low cost.

On the contrary, the configuration shown in FIG. 8 is advantageous in that beamforming focusing can be easily achieved. However, since all antenna elements are connected to the TXRU, it has a disadvantage of high cost.

When a plurality of antennas is used in the NR system to which the present disclosure is applicable, a hybrid beamforming (BF) scheme in which digital BF and analog BF are combined may be applied. In this case, analog BF (or radio frequency (RF) BF) means an operation of performing precoding (or combining) at an RF stage. In hybrid BF, each of a baseband stage and the RF stage perform precoding (or combining) and, therefore, performance approximating to digital BF can be achieved while reducing the number of RF chains and the number of a digital-to-analog (D/A) (or analog-to-digital (A/D) converters.

For convenience of description, a hybrid BF structure may be represented by N transceiver units (TXRUs) and M physical antennas. In this case, digital BF for L data layers to be transmitted by a transmission end may be represented by an N-by-L matrix. N converted digital signals obtained thereafter are converted into analog signals via the TXRUs and then subjected to analog BF, which is represented by an M-by-N matrix.

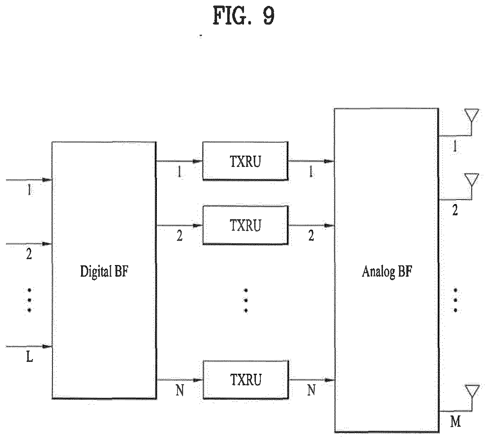

FIG. 9 is a diagram schematically illustrating an exemplary hybrid BF structure from the perspective of TXRUs and physical antennas according to the present disclosure. In FIG. 9, the number of digital beams is L and the number analog beams is N.

Additionally, in the NR system to which the present disclosure is applicable, an eNB designs analog BF to be changed in units of symbols to provide more efficient BF support to a UE located in a specific area. Furthermore, as illustrated in FIG. 9, when N specific TXRUs and M RF antennas are defined as one antenna panel, the NR system according to the present disclosure considers introducing a plurality of antenna panels to which independent hybrid BF is applicable.

In the case in which the eNB utilizes a plurality of analog beams as described above, the analog beams advantageous for signal reception may differ according to a UE. Therefore, in the NR system to which the present disclosure is applicable, a beam sweeping operation is being considered in which the eNB transmits signals (at least synchronization signals, system information, paging, and the like) by applying different analog beams in a specific subframe (SF) on a symbol-by-symbol basis so that all UEs may have reception opportunities.

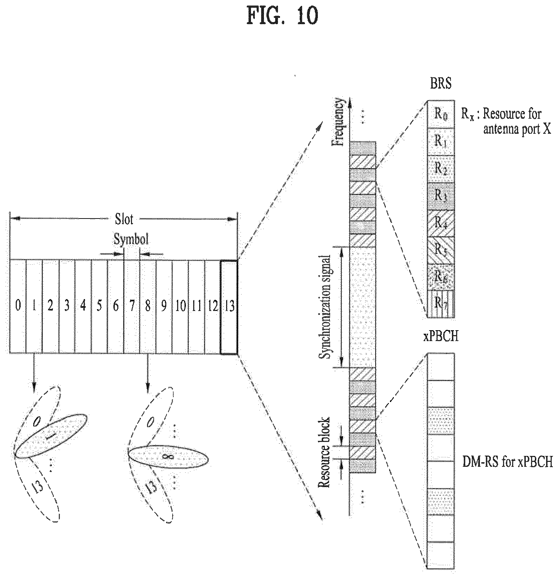

FIG. 10 is a diagram schematically illustrating an exemplary beam sweeping operation for a synchronization signal and system information in a DL transmission procedure according to the present disclosure.

In FIG. 10 below, a physical resource (or physical channel) on which the system information of the NR system to which the present disclosure is applicable is transmitted in a broadcasting manner is referred to as an xPBCH. Here, analog beams belonging to different antenna panels within one symbol may be simultaneously transmitted.

As illustrated in FIG. 10, in order to measure a channel for each analog beam in the NR system to which the present disclosure is applicable, introducing a beam RS (BRS), which is a RS transmitted by applying a single analog beam (corresponding to a specific antenna panel), is being discussed. The BRS may be defined for a plurality of antenna ports and each antenna port of the BRS may correspond to a single analog beam. In this case, unlike the BRS, a synchronization signal or the xPBCH may be transmitted by applying all analog beams in an analog beam group such that any UE may receive the signal well.

**3. Proposed Embodiments**

Based on the above-described technical features, a description will be given of a method of designing a physical uplink control channel (PUCCH), which is a physical channel for transmitting a UL control signal, and a method of transmitting the PUCCH using the same.

The NR system, one of the 5G next-generation communication technologies, has considered as its operating frequency bands not only frequency bands above 6 GHz but frequency bands below 6 GHz. In particular, the NR system has considered the use of frequency bands of the legacy LTE system (e.g., 3.5 GHz) as well as new frequency bands which are not used by the legacy LTE system (e.g., 4 GHz) among the frequency bands below 6 GHz. In addition, a deployment scenario where the NR system coexist with the legacy LTE system on the frequency bands thereof reflects the needs of network operators who desire to put the NR system on the market as soon as possible.

For example, a scenario where software updates are applied to some (or all) of the many LTE-based small cell BSs installed in a hotspot to operate them in the NR system may be considered. In this case, each small cell may be connected to a macro cell through an ideal backhaul and operate under the carrier aggregation framework. Alternatively, each small cell may be connected to a macro cell through a non-ideal backhaul and operate in dual connectivity mode. For the transition from 4G to 5G, it should be considered that a UE operating in the NR system and a UE supporting only the legacy LTE system may coexist with each other in the same frequency band.

For UEs supporting only the LTE system, some eNBs may provide only LTE-based services without upgrading to the NR system. In this case, an LTE-based BS (eNB) and a NR-based BS (gNB) may coexist in a non-co-located situation. Alternatively, all BS may be upgraded as gNBs, but some of the gNBs may temporarily provide LTE-based services to serve the UEs supporting only the LTE system using some or all of the frequency bands.

Further, a scenario where a gNB shares and uses resources of an eNB dynamically or (semi-) statically may also be considered. In this case, the gNB may be co-located with the eNB. That is, the gNB and eNB may be installed in the same site. A NR UE may use some synchronization signals, RSs, and physical channels of the legacy LTE system based on information of the eNB, which is transmitted from the gNB, for better operation in the NR system.

In the present disclosure, potential co-location scenarios are classified, and quasi co-location (QCL) information required for each scenario is defined. In addition, a method by which a UE uses received QCL information is described in detail.

### 3.1. Co-location Scenario of LTE and NR

For the NR system, a method of allowing a NR gNB to use some resources of an LTE eNB (LTE-NR coexistence) dynamically or (semi-) statically has been considered. In this case, among LTE resources, a resource temporarily used by the gNB is named 'blank resource'.

In addition, the gNB may use the blank resource for NR DL or UL.

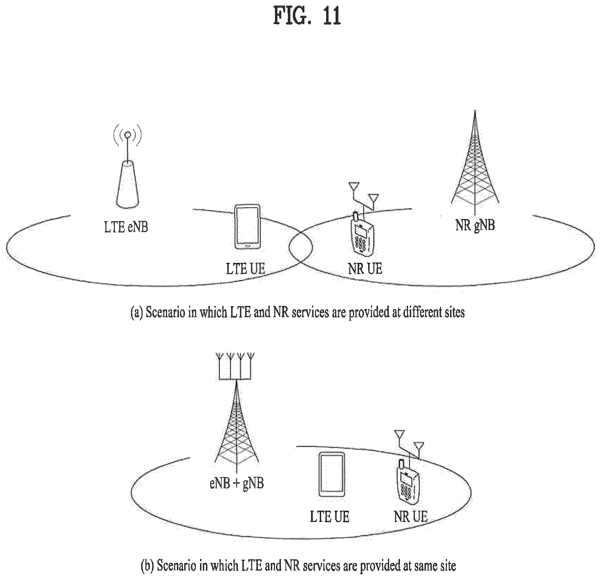

FIG. 11 is a diagram illustrating a scenario in which LTE and NR services are provided.

The scenario of providing LTE and NR services can be divided into scenarios (a) and (b) as shown in FIG. 11.

In the following, the features of the present disclosure are described, focusing on a co-location scenario in which LTE and NR services are provided at the same site. However, similar to the LTE coordinated multi-point (CoMP), a network may allow a NR UE to use an LTE signal even though an eNB and a gNB are at different sites.

An eNB may configure multicast broadcast single frequency network (MBSFN) subframes within a transmission time interval (TTI) (e.g., 1 msec) except a control region, and a gNB may use the remaining parts except the control region and synchronization resources (e.g., a primary synchronization signal (PSS), a secondary synchronization signal (SSS), and a physical broadcast channel (PBCH)).

In the control region, a CRS, a PCHICH, a PHICH, and a PDCCH may be transmitted for a legacy LTE UE. If a NR UE is capable of accessing a NR cell that opportunistically utilizes the blank resource using the LTE MBSFN subframe, the NR UE may use an LTE signal or channel included in the LTE control region to efficiently perform DL automatic gain control (AGC), time/frequency tracking, channel estimation, UL timing adjustment and power control, etc.

In time division duplex (TDD), a UL region may not be scheduled to an LTE UE and corresponding resources may be configured for a NR UE as DL resources according to a UL/DL configuration. On the contrary, a DL region may not be scheduled to the LTE UE and corresponding resources may be configured for the NR UE as UL resources.

Further, an LTE UL subframe and a small cell off region may be set as the blank resource for a NR UE.

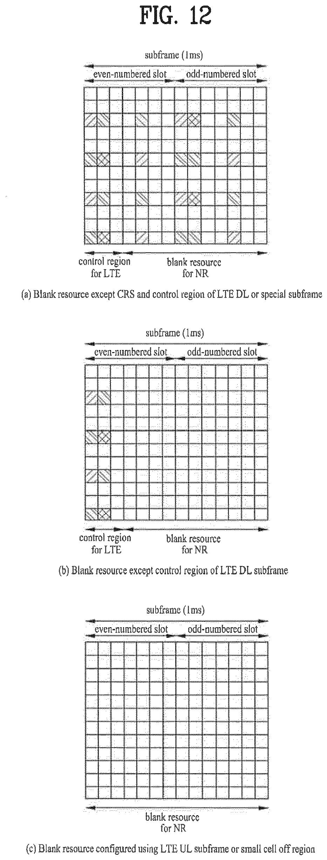

FIG. 12 is a diagram illustrating three blank resource configurations for individual scenarios.

In the blank resource scenario of FIG. 12(a), it may be assumed that the NR and LTE systems uses the same numerology. In the blank resource scenario of FIG. 12(b), it is assumed that a NR UE uses some RSs of the LTE system. In this case, the RSs of the LTE system may include RSs included not only in a control region but also in a DwPTS of a TDD special subframe.

In the blank scenario of FIG. 12(c), it is assumed that a NR UE does not use any RSs of the LTE system.

A NR UE may use at least one of legacy synchronization resources, RSs and physical channels in a control region depending on co-location scenarios of a gNB and an eNB.

According to an embodiment of the present disclosure, the co-location scenarios may be classified as follows based on seven perspectives.

(1) Site

- Classification depending on locations of eNB and gNB

   1) Same site (eNB = gNB)
   2) Different site (eNB ≠ gNB)

(2) Antenna port

- Classification depending on how RSs of DL data and control channel transmitted by gNB or RSs of UL data and control channel transmitted by NR UE are associated with RSs from eNB (e.g., CRS and/or CSI-RS)

   1) When LTE CRS is associated with NR RS

      1> LTE CRS ports ∈ NR RS ports

      - When no precoding is applied to NR RS
      - When precoding is applied to NR RS

      2> Otherwise

      - When no precoding is applied to NR RS
      - When precoding is applied to NR RS

   2) When LTE CSI-RS is associated with NR RS

      1> When different precoding is applied to NR RS and LTE CSI-RS
      2> When same precoding is applied to NR RS and LTE CSI-RS

(3) Bandwidth

- Classification depending on BWs of LTE and NR

   1) LTE BW > NR BW
   2) LTE BW = NR BW
   3) LTE BW < NR BW

(4) Center carrier (center carrier frequency of bandwidth)

- Classification depending on locations of LTE BW center carrier and NR BW center carrier

   1) Same fc
   2) Different fc

(5) Cell ID

- Classification depending on configurations of eNB's cell ID and gNB's cell ID

   1) Same cell ID between eNB and gNB
   2) Different cell ID between eNB and gNB

(6) Numerology of CP length, subcarrier spacing, and resource grid

- The NR can support various numerologies unlike the LTE, and the numerologies can be dynamically changed. Thus, the numerology scenario of each RAT may be classified as follows.

1) Same numerology
2) Different numerology

### 3.2. Configuration and Utilization of QCL (Quasi Co-Located) Information

Before describing details of co-location information, a method of using QCL information of NR and LTE cells will be described first.

For example, when a NR UE uses QCL information, the NR UE may use synchronization signals (e.g., PSS, SSS, etc.), broadcasting channels (e.g., PBCH, PCFICH, PHICH, etc.), and RSs on LTE carriers for the following purposes.

(1) LTE-aided synchronization/cell detection/cell acquisition

- Before allocating a blank resource on an LTE carrier to a NR UE, a NR cell or a TRP may need receive, from the NR UE, a report on whether an LTE cell or another TRP exists on the corresponding carrier and the cell ID thereof. In this case, the NR cell or the TRP may transmit information on cell IDs of candidate cells that may exist on the corresponding carrier using a NR carrier in advance. Thus, the NR UE may reduce the complexity of synchronization/cell detection/cell acquisition and the processing time thereof.

(2) LTE-aided AGC

- Before demodulating a NR channel transmitted on a blank resource, a NR UE may need to perform AGC for a signal received from a cell or a TRP associated with the allocated blank resource. In this case, if a gNB informs the NR UE of information on the associated cell or TRP in advance, the NR UE may perform the AGC rapidly and accurately using an LTE signal or channel before reception on the blank resource. In this case, the transmission power of the LTE signal or channel used for the AGC may be different from that of the NR channel transmitted on the blank resource, and the gNB may transmit relevant information to the NR UE.

(3) LTE-aided time/frequency tracking

- Before demodulating a NR channel transmitted on a blank resource, a NR UE may perform time/frequency tracking for a cell or a TRP associated with the allocated blank resource. In this case, if the NR UE performs the tracking using a NR RS included in the blank resource only, inter-carrier interference/inter-symbol interference (ICI/ISI) may occur during an OFDM (or OFDMA) demodulation process. In particular, when some narrowband resources are intermittently allocated to the NR UE, the performance of the time/frequency tracking may be degraded due to an insufficient number of RSs. In this case, the NR UE may use a wideband LTE signal or channel, which is outside the blank resource, to overcome the performance degradation.

(4) LTE-aided channel estimation

- In the case of a NR channel transmitted on a blank resource, an RS may be included only in an RB as in a DM-RS of the legacy LTE system. When a NR UE is allocated a wideband resource, different precoding may be applied to RBs as in precoding subbands of the LTE system. Accordingly, the NR UE may perform channel estimation in a narrow band or a subband. In this case, performance may be degraded compared to wideband channel estimation. To overcome this problem, the NR UE may perform minimum mean square error (MMSE) channel estimation.
- To this end, although the NR UE requires the statistical characteristics of a channel (e.g., required minimum distribution (RMD) delay and Doppler frequency), the statistical characteristics of the corresponding channel may not be estimated if there is no wideband signal. Thus, the NR UE may use QCL information between the RS of the NR channel transmitted on the blank resource and an LTE RS in a similar way that QCL information between a DM-RS and a CRS or a CSI-RS is used in the legacy LTE CoMP.

(5) LTE-aided Uplink power control

- For UL power control, the LTE system generally uses open-loop power control, which is performed by measuring a DL RS, and closed-loop power control, where an eNB controls UL power of a UE based on UL measurement. In the case of a NR-LTE coexistence scenario where a blank resource is allocated as a UL resource for a NR UE, the NR UE may not apply a UL power control value applied to a NR carrier to the blank resource.
- To apply the open-loop power control to the blank resource, the NR UE may apply NR UL power control based on a DL signal or channel on a corresponding LTE carrier. In this case, the NR UE may use different parameters for the UL open-loop power control based on the DL signal on the LTE carrier and the NR UL power control, respectively, and if an offset is required, a gNB should inform the NR UE of relevant information.

(6) LTE-aided Uplink timing adjustment

- In general, UL timing adjustment is controlled by a relative UL timing offset value with respect to a DL timing during a random access procedure. If timing reference is updated during a DL timing tracking process, a UL timing is also tracked. However, considering that a NR UE intermittently uses a blank resource, the BW of a NR RS, which is transmitted in a narrow band, may be insufficient for the NR UE to perform timing tracking. As a result, the accuracy of UL timing control may be degraded. Since the NR and LTE may have different carrier frequencies, the UL timing adjustment may not be performed with respect to the DL timing. Accordingly, the NR UE may perform LTE carrier DL timing tracking using an LTE DL signal or channel transmitted in a wide band and reflect the corresponding result in NR UL timing adjustment for the blank resource.

The above-described purposes may be differently used by a NR UE depending on various scenarios such as an LTE BW, a NR BW, etc.

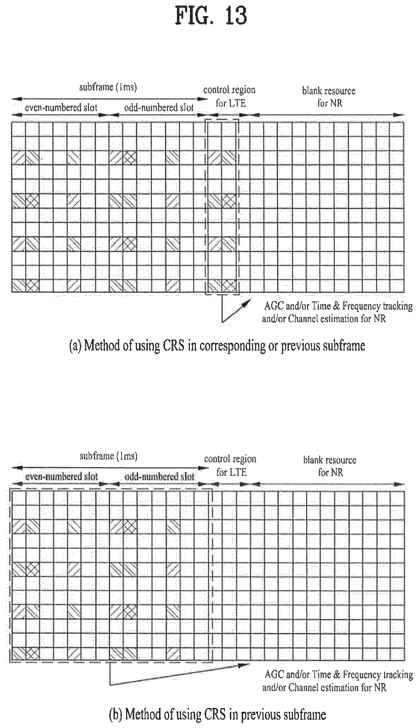

FIG. 13 is a diagram schematically illustrating a signal capable of being used by a NR UE in one RB when LTE and NR use the same numerology.

For clarity, FIG. 13 shows only CRSs in a PRB pair of a blank resource and an LTE PRB pair corresponding thereto. In this case, a NR UE may use RSs (e.g., CRS, CSI-RS, etc.) in a random PRB pair according to QLC information provided by a gNB.

In addition, the NR UE may use not only a PRB pair included in a non-adjacent subframe but also synchronization signals (e.g., PSS, SSS, etc.) and broadcasting channels (e.g., PBCH, PCFICH, PHICH) included in LTE carriers. In addition to the methods shown in FIG. 13, UL power control, timing adjustment, etc. may also be considered.

The following information may be used as QCL information of LTE and NR RSs required for the above-described purposes.

[1] Antenna port

1] RS QCL

1> QCL b/w CRS port and NR RS port

- # CRS port
- Linkage between LTE CRS ports and NR RS ports

2> QCL b/w CSI-RS port and NR RS port

- CSI-RS configuration

[2] Duplex

1] FDD

- Whether DL or not

2] TDD

- UL/DL configuration or whether DL, UL or special subframe
- Special subframe configuration

[3] CP (Cyclic Prefix) mode

- Whether Normal CP or not

[4] Power

- Power ratio b/w CRS and NR RS
- Power ratio b/w CSI-RS and NR RS

[5] Cell ID

- Cell ID of LTE system. In the LTE system, 504 cell IDs are defined, whereas in the NR system, 1008 cell IDs are defined. The LTE cell IDs may be separately indicated.

[6] Resource block

- Relative offset from LTE center carrier

[7] Bandwidth

- # of RBs

[8] Center frequency of LTE or offset between centers of NR and LTE

- Information required for NR UE to process DC tone and read CRS/CSI-RS

The above information may be information on a carrier including a blank resource used for the NR among carrier components used in the LTE. Accordingly, when multicarrier components are used, the information may be configured as follows.

[A] The same information for all component carriers is set to common information. A separate message is configured only for information different for each component carrier.
[B] The separate message is configured for each component carrier.

In this case, the above information may be common or dedicated information and transmitted as follows.

A] A NR gNB may set the information as cell or beam common information.

- The corresponding gNB broadcasts information on all LTE component carriers that may potentially include a blank resource.
- When a NR UE is allocated the blank resource, the NR UE may additionally use an LTE RS based on the pre-configured information.
- If necessary, the gNB may dynamically disable the preconfigured LTE-assist information.

B] The information may be set as NR UE-specific information, that is, as dedicated information.

- A corresponding gNB may configure information on all LTE component carriers that may potentially include a blank resource through an RRC message, etc.
- Alternatively, information on an LTE component carrier including a blank resource to be used by a corresponding UE may be configured though an RRC message, etc.
- If necessary, the gNB may dynamically disable the preconfigured LTE-assist information.

**3.3 Method of Using QCL Information**

Hereinafter, a method of using QCL information will be described in detail based on the above-described technical features. If a blank resource is capable of being allocated to multiple LTE carriers, the allocation operation may be defined separately for each component carrier or commonly for all component carriers. The QCL information may also be used when a NR cell in LTE spectrum is scheduled rather than when a NR PCell or a NR SCell in a NR spectrum is scheduled.

3.3.1. LTE-aided Synchronization/Cell Detection/Cell Acquisition

[1] A gNB may transmit to a NR UE QCL information of an LTE carrier to which a blank resource is capable of being allocated, RRM-Config, measurement configuration information of RRCConnectionReconfiguration, measConfig, and measObject.
To minimize the measurement gap interval of the NR UE, the QCL information may include synchronization information between the gNB and the LTE carrier and be configured as follows.

1> SyncWindow $\in$ {w0, w1, ..., wN}
w0 is set when the time synchronization between the gNB and an eNB is equal to or less than 144Ts/M or 512Ts/M (where M is equal to or more than 1 and may be predefined in specifications or configured through high-level signaling, and Ts is 1/30.72 usec).
wn is set when the time synchronization offset between the gNB and the eNB is equal to or less than 144Ts/M, 512Ts/M, or a multiple of n with a specific value greater than it (where the specific value may be predefined in specification or configured through high-level signaling, and n is less than N).
wN is set when the time synchronization offset between the gNB and the eNB is more than w(N-1).
2> Information on measurement gap interval of LTE carrier. In particular, when an eNB uses TDD, a UL/DL configuration and/or a special subframe configuration may be additionally included.
3> cpMode $\in$ {normal, extended}. Here, each indicates a normal CP and an extended CP of the LTE.

[2] A NR UE may perform measurement such as an intra-frequency (automatic neighbor relation) ANR procedure, an inter-frequency ANR procedure, or an inter-RAT ANR procedure and reports the measurement to a gNB.

The NR UE may aperiodically or periodically report the measurement result of an LTE carrier to the gNB. The measurement report procedure for blank resource allocation may be defined to be different from the inter-RAT measurement procedure.

3.3.2. LTE-aided AGC

[1] When a NR UE performs AGC first based on an LTE signal or channel before receiving a NR channel transmitted on a blank resource for fast AGC, the NR UE may be provided with information on a signal or channel corresponding to reference.

- The LTE signal or channel corresponding to the reference may be configured as follows.
- A part of a synchronization signal (e.g., PSS, SSS, and/or PBCH)
- A part of an RS (e.g., CRS and/or CSI-RS)
- A gNB may configure information on the cell ID and antenna port of the LTE signal or channel to be used for the blank resource AGC and transmit the information to the NR UE.

Additionally, cpMode information (e.g., cpMode $\in$ {normal, extended}) may also be provided to the NR UE, where each indicates a normal CP and an extended CP of the LTE.
[2] When a NR UE performs AGC first based on an LTE signal or channel before receiving a NR channel transmitted on a blank resource for fast AGC, the NR UE may be provided with information on transmission power of the NR channel on the blank resource and information on a transmission power offset of the LTE signal or channel used for the AGC.

- The transmission power offset corresponds to a transmission power difference between gNB's RS transmission power and transmission power of the LTE signal or channel, and it may be configured as follows.
- nrX-lteY-PowerOffset ENUMERATED {dB-6, dB-4dot77, dB-3, dB-1dot77, dB0, dB1, dB1dot23, dB2, dB3, dB4, dB4dot23, dB5, dB6, dB7, dB8, dB9}
- nrX means an RS transmitted on the blank resource, and lteY may correspond to an LTE CRS, an LTE synchronization signal, or an LTE CSI-RS. In addition, the value of Z in dB-Z may be defined different from that in the above example.
- The BW of the blank resource may be different from that of the LTE signal or channel used for the AGC. A gNB may configure relevant information and transmit the information to the NR UE through high-level signaling.
- Information on the BW of the LTE signal or channel may be specified using a combination of an E-UTRA absolute radio frequency channel number (EARFCN) and a BW value or using a relative offset with respect to the blank resource.

### 3.3.3. LTE-aided Time/Frequency Tracking

[1] Before reception on a blank resource, a NR UE may be provided with information indicating how to perform time/frequency tracking using an LTE signal or channel.

- An LTE signal or channel corresponding to reference may be configured as follows.
- A part of a synchronization signal (e.g., PSS, SSS, and/or PBCH)
- A part of an RS (e.g., CRS and/or CSI-RS)
- cpMode $\in$ {normal, extended}. Here, each indicates a normal CP and an extended CP of the LTE.
- A gNB may configure information on the cell ID and antenna port of the LTE signal or channel to be used for the blank resource time/frequency tracking and transmit the information to the NR UE.
- The frequency allocation and BW of the LTE signal or channel may be different from those of the blank resource. The gNB may configure relevant information and transmit the information to the NR UE through high-level signaling.
- Information on the BW of the LTE signal or channel may be specified using a combination of an EARFCN and a BW value or using a relative offset with respect to the blank resource.

### 3.3.4. LTE-aided Channel Estimation

[1] A NR UE may be provided with information on a QCLed LTE RS or channel that may have the same statistical characteristics as a NR RS transmitted on a blank resource.

- Information on a QCL antenna port may be configured as follows.
  nrX-lteY ENUMERATED {SS, CRS, CSI-RS}
- lteY means an LTE signal or channel QCLed with NR RS X, and an SS may be a PSS, an SSS, and/or a PBCH. In addition, the configuration of nrX-lteY may be different from that of the above example.
  lteY-port ENUMERATED {0, (0,1), (0,1,2,3), 15, (15,16), (15,16,17,18), (15,16,...,22), (15,16,...,26), (15,16,...,30)}
- lteY may indicate a CRS or a CSI-RS and correspond to a set of LTE antenna ports QCLed with RSs in the blank resource.
- A transmission power offset between the QCLed LTE RS or channel and the blank resource RS may correspond to a transmission power difference between gNB's RS transmission power and transmission power of the LTE signal or channel, and it may be configured as follows.
  nrX-lteY-PowerOffset ENUMERATED {dB-6, dB-4dot77, dB-3, dB-1dot77, dB0, dB1, dB1dot23, dB2, dB3, dB4, dB4dot23, dB5, dB6, dB7, dB8, dB9}
- nrX means the RS transmitted on the blank resource, and lteY may correspond to an LTE CRS, an LTE synchronization signal, or an LTE CSI-RS. In addition, the value of Z in dB-Z may be defined different from that in the above example.
- A gNB may configuration information on the cell ID of the QCLed LTE signal or channel and transmit the information to the NR UE.
- The frequency allocation and BW of the LTE signal or channel may be different from those of the blank resource.

The gNB may configure relevant information and transmit the information to the NR UE through high-level signaling.

- Information on the BW of the LTE signal or channel may be specified using a combination of an EARFCN and a BW value or using a relative offset with respect to the blank resource.

Additionally, cpMode information (e.g., cpMode $\in$ {normal, extended}) may also be provided to the NR UE, where each indicates a normal CP and an extended CP of the LTE.

3.3.5. LTE-aided Uplink Power Control

(1) Blank resource NR UL open-loop power control based on a DL signal on an LTE carrier may be applied to the following channels.

- A NR UL channel with the same or similar functionality to that of an LTE SRS
- A NR UL channel with the same or similar functionality to that of an LTE PUCCH
- A NR UL channel with the same or similar functionality to that of an LTE PUSCH

(2) When blank resource NR UL open-loop power control based on a DL signal on an LTE carrier is applied, the value of a power control parameter for a blank resource may be different from that of a power control parameter for a NR carrier.

1) uplinkPowerControlDedicated-NR

- A message for NR UL power control

2) uplinkPowerControlDedicated-NRBR

- A message for NR UL power control on the blank resource
- Part of uplinkPowerControlDedicated-NRBR may be transmitted through dynamic signaling and carried by a UL grant.

(3) cpMode $\in$ {normal, extended}

- Each indicates a normal CP and an extended CP of the LTE.

3.3.6. LTE-aided Uplink Timing Adjustment

(1) Blank resource NR UL timing adjustment based on a DL signal on an LTE carrier may be applied to the following channels.

- A NR UL channel with the same or similar functionality to that of an LTE SRS
- A NR UL channel with the same or similar functionality to that of an LTE PUCCH
- A NR UL channel with the same or similar functionality to that of an LTE PUSCH

(2) When blank resource NR UL timing adjustment based on a DL signal on an LTE carrier is applied, information on an LTE RS or channel may be configured as follows.

1) An LTE signal or channel corresponding to reference may be configured as follows.

- A part of a synchronization signal (e.g., PSS, SSS, and/or PBCH)
- A part of an RS (e.g., CRS and/or CSI-RS)
- cpMode $\in$ {normal, extended}
- Each indicates a normal CP and an extended CP of the LTE.

2) A gNB may configure and transmit information on the cell ID and antenna port of an LTE signal or channel to be used for blank resource time/frequency tracking.

3) The frequency allocation and BW of the LTE signal or channel may be different from those of a blank resource. The gNB may configure relevant information and transmit the information to a NR UE through high-level signaling.

- Information on the BW of the LTE signal or channel may be specified using a combination of an EARFCN and a BW value or using a relative offset with respect to the blank resource.

(3) If the BW of the LTE system, which corresponds to reference, is different from that of the NR system, the value of a timing adjustment parameter for a blank resource may be different from that of a timing adjustment parameter for a NR carrier.

1) Timing Advance Command-NR

- A MAC message for NR UL timing adjustment

2) Timing Advance Command-NRBR

- A message for NR UL timing adjustment on the blank resource
- Part of Timing Advance Command-NRBR may be transmitted through dynamic signaling and carried by a UL grant.
- The actual value of Ts in Timing Advance Command-NRBR may be interpreted differently on the NR carrier and the blank resource.

Hereinafter, the composition of the present disclosure will be described in detail.

In the legacy LTE system, timing advance (TA) may be applied as follows.

The timing adjustment indication specified in [11] indicates the initial $N_{TA}$ used for a TAG. The timing advance command for a TAG indicates the change of the uplink timing relative to the current uplink timing for the TAG as multiples of 16 $T_s$. The start timing of the random access preamble is specified in [3].

In the NR system to which the present disclosure is applicable, the TA may be applied as follows.

The timing adjustment indication specified in [12, TS 38.331] indicates the initial $N_{TA}$ used for a TAG. For a subcarrier spacing of $2^{\mu}\cdot 15$ kHz, the timing advance command for a TAG indicates the change of the uplink timing relative to the current uplink timing for the TAG as multiples of $16\cdot 64\cdot T_C/2^{\mu}$. The start timing of the random access preamble is specified in [4, TS 38.211].

The subcarrier spacing of the NR system may be configured as shown in Table 2 above.

In other words, the numerology (or subcarrier spacing) of the legacy LTE system is fixed to 15 kHz, whereas the numerology (or subcarrier spacing) of the NR system to which the present disclosure is applicable may be changed to $2^{\mu} * 15$ kHz.

Thus, a parameter $N_{TA}$, which is transmitted on a NR carrier (or LTE carrier), may be interpreted differently depending on the numerology (or subcarrier spacing) of an LTE carrier (or NR carrier) that actually carries a UL signal.

The composition of the present disclosure will be described in further detail.

A BS may schedule transmission of a UL signal in a first system band based on a first numerology but transmit a TA message thereon in a second system band based on a second numerology rather than the first system band. In this case, the first and second system bands may correspond to an LTE carrier and a NR carrier, respectively. On the contrary, the first and second system bands may correspond to a NR carrier and an LTE carrier, respectively.

For convenience of description, the present disclosure assumes that the BS transmits the TA message (including UL scheduling DCI, etc.) on a NR carrier and the UL scheduling DCI is transmitted only to schedule UL transmission on an LTE carrier. However, the present disclosure is not limited thereto.

If the system (e.g., NR system) that transmits the TA message is different from the system (e.g., LTE system) that schedules the UL transmission, the BS may further transmit additional TA information to a UE. In the following, a value provided as a TA message applied to UL transmission is named 'Timing Advance Command-NR ($N_{TA}$)', and additional TA information is named 'Timing Advance Command-NRBR (Y)'.

Accordingly, the UE may perform timing adjustment based on a time unit used by the system which actually occupies UL resources rather than a system time unit for scheduling the UL transmission (and transmitting the TA message).

For example, Y may mean a TA offset.

- In this case, the UE may determine the TA value as $N_{TA} \cdot 16 \cdot 64 \cdot T_C/2^{\mu} +$ (offset derived from Y).

- As a particular example, when the UE attempts to transmit a NR signal on an LTE resource, the UE may interpret the TA value as $N_{TA} \cdot 16 \cdot 64 \cdot T_c/2^\mu + Y \cdot 64 \cdot T_c$ and transmit the NR signal on the LTE resource by applying the interpreted TA value to the NR signal. In other words, the UE may apply the offset value corresponding to Y by interpreting the offset value based on a unit of Ts of the LTE system.

As another example, Y may mean a ratio that compensates for a numerology difference between the NR system and the LTE system.

- In this case, the UE may determine the TA value as $N_{TA} \cdot 16 \cdot 64 \cdot T_c/2^\mu \cdot$ (offset derived from Y).
- As a particular example, when the UE attempts to transmit a NR signal on an LTE resource, the UE may interpret the TA value as $N_{TA} \cdot 16 \cdot 64 \cdot T_c/2^\mu \cdot 2^{-\mu}$ and transmit the NR signal on the LTE resource by applying the interpreted TA value to the NR signal. In other words, the UE may adjust and apply the ratio of the TA value indicated by the offset value $2^{-\mu}$ corresponding to Y. By doing so, the effect of $\mu$, which is one parameter value for determining the TA value, may be cancelled. In the NR system, when $\mu = 2$, Y is set to - 2 as described in the above example, thereby providing the above effect.

Additionally, if the number of other candidate systems where UL transmission is scheduled at a specific time is one (e.g., LTE system) and the BS and UE know this fact, the BS may only concern the presence of Y regardless the value of Y.

For example, if the UE is allocated Y, the TA value may be interpreted based on the time unit of the different system (e.g., LTE). Thus, the TA value transmitted in the NR system may be interpreted as $N_{TA} \cdot 16 \cdot 64 \cdot T_c$.

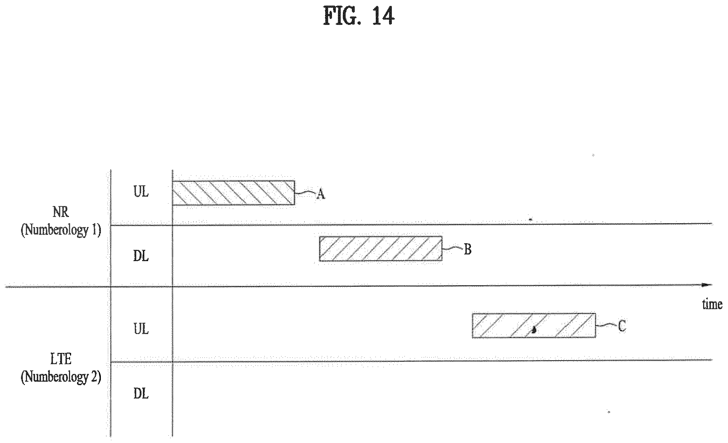

FIG. 14 is a diagram schematically illustrating a method of transmitting a UL signal between a UE and a BS applicable to the present disclosure.

Although FIG. 14 separately shows UL/DL bands of the NR system and UL/DL bands of the LTE system for clarity, it is merely a means of representing UL/DL signals of each system. In other words, frequency division multiplexing (FDM), time division multiplexing (TDM), code division multiplexing (CDM) may be applied to UL and DL signals of the NR system, and then the UL and DL signals may be transmitted. Alternatively, among the FDM, TDM, and CDM, a plurality of multiplexing methods may be applied to the UL and DL signals of the NR system for transmission thereof. Similarly, among the FDM, TDM, and CDM, at least one multiplexing method may be applied to UL and DL signals of the LTE system for transmission thereof.

In FIG. 14, it is assumed that a first system corresponds to the NR system to which numerology 1 is applied and a second system corresponds to the LTE system to which numerology 2 is applied. The present disclosure is described based on the above assumption, but in some embodiments, the first and second systems may correspond to the LTE system to which numerology 2 is applied and the NR system to which numerology 1 is applied, respectively.

First, a UE may transmit a UL signal (A) in the first system (e.g., NR). In this case, the UL signal (A) may be one of a sounding reference signal (SRS), a PUCCH signal, and a PUSCH signal.

Then, a BS may determine a UL TA value based on the UL signal (A) and transmit a UL TA command (B) indicating the determined UL TA value to the UE in the first system (e.g., NR). In addition, the BS may transmit to the UE a signal (B) including information for scheduling UL transmission in the second system (e.g., LTE) and a UL timing adjustment parameter for the UL TA command in the second system.

For example, among multiple pieces of information included in the signal (B), the UL TA command may be transmitted in a medium access control (MAC) message, and the information for scheduling the UL transmission in the second system and the UL timing adjustment parameter for the UL TA command in the second system may be transmitted in UL scheduling DCI.

Upon receiving the signal (B), the UE transmits a UL signal (C) in the second system (e.g., LTE) where the UL transmission is scheduled. In this case, the UE adjusts the timing of the UL signal (C) based on a time obtained by applying the UL adjustment parameter for the UL TA command and then transmits the UL signal (C) to the BS in the second system (e.g., LTE).

The time obtained by applying the UL adjustment parameter for the UL TA command may be determined as follows.

For example, the time obtained by applying the UL adjustment parameter for the UL TA command may be equivalent to the sum of a first time obtained by applying the UL TA command to the first system and a second time obtained by applying the uplink timing advance command to the second system.

As another example, the time obtained by applying the UL adjustment parameter for the UL TA command may be equivalent to a time determined by the multiplication of the time obtained by applying the UL TA command to the first system and information indicated by the UL timing adjustment parameter.

The first numerology applied to the first system may be different from the second numerology applied to the second system.

Since examples of the above-described proposal method may also be included in one of implementation methods of the present disclosure, it is obvious that the examples are regarded as a sort of proposed methods. Although the above-proposed methods may be independently implemented, the proposed methods may be implemented in a combined (aggregated) form of a part of the proposed methods. A rule may be defined such that the base station informs the UE of information as to whether the proposed methods are applied (or information about rules of the proposed methods) through a predefined signal (e.g., a physical layer signal or a higher-layer signal).

## 4. Device Configuration

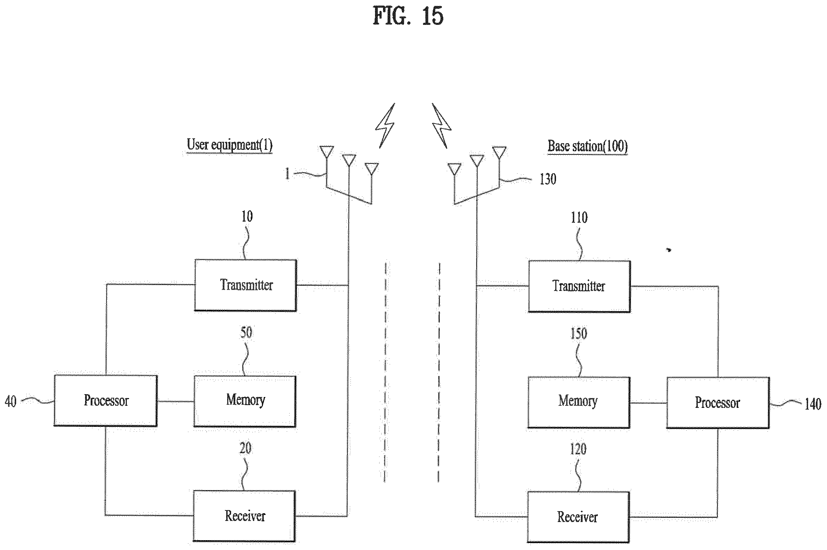

FIG. 15 is a diagram illustrating the configurations of a UE and a BS for implementing the proposed embodiments. The UE and BS illustrated in FIG. 15 operate to implement the embodiments of the signal transmission and reception method therebetween.

The UE 1 may act as a transmission end in UL and as a reception end in DL. The BS (eNB or gNB) 100 may act as a reception end in UL and as a transmission end in DL.

That is, each of the UE and the BS may include a transmitter (Tx) 10 or 110 and a receiver (Rx) 20 or 120 for controlling transmission and reception of information, data, and/or messages and an antenna 30 or 130 for transmitting and receiving information, data, and/or messages.

Each of the UE and the BS may further include a processor 40 or 140 for implementing the afore-described embodiments of the present disclosure and a memory 50 or 150 for temporarily or permanently storing operations of the processor 40 or 140.

With the above-described configuration, the BS 100 transmits a UL TA command to the UE through the Tx 110 in a first system to which a first numerology is applied. Next, the BS 100 transmits information for scheduling UL transmission in a second system to which a second numerology is applied and a UL timing adjustment parameter for the UL TA command in the second system to the UE through Tx 110 in the first system to which the first numerology is applied. Thereafter, the BS 100 receives a first UL signal of which the timing is adjusted by a time obtained by applying the UL adjustment parameter for the UL TA command from the UE through the Rx 120 in the second system to which the second numerology is applied.

The UE 1 receives the UL TA command from the BS through the Rx 20 in the first system to which the first numerology is applied. Next, the UE receives the information for scheduling the UL transmission in the second system to which the second numerology is applied and the UL timing adjustment parameter for the UL TA command in the second system from the BS through the RX 20 in the first system to which the first numerology is applied. Thereafter, the UE 1 transmits the first UL signal of which the timing is adjusted by the time obtained by applying the UL adjustment parameter for the UL TA command to the BS through the Tx 10 in the second system to which the second numerology is applied.

The Tx and Rx of the UE and the BS may perform a packet modulation/demodulation function for data transmission, a high-speed packet channel coding function, OFDM packet scheduling, TDD packet scheduling, and/or channelization. Each of the UE and the BS of FIG. 15 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

The embodiments of the present disclosure may be achieved by various means, for example, hardware, firmware, software, or a combination thereof.

In a hardware configuration, the methods according to exemplary embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present disclosure may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment of the present disclosure or included as a new claim by a subsequent amendment after the application is filed.

**INDUSTRIAL APPLICABILITY**

The present disclosure is applicable to various wireless access systems including a 3GPP system, and/or a 3GPP2 system. Besides these wireless access systems, the embodiments of the present disclosure are applicable to all technical fields in which the wireless access systems find their applications. Moreover, the proposed method can also be applied to mmWave communication using an ultra-high frequency band.

**Claims**

1. A method of receiving an uplink signal from a user equipment (UE) by a base station in a wireless communication system, the method comprising:

   transmitting, to the UE, an uplink timing advance command in a first system, wherein a first numerology is applied to the first system;
   transmitting, to the UE, in the first system the first numerology applied, information on scheduling uplink transmission in a second system and an uplink timing adjustment parameter for the uplink timing advance command in the second system, wherein a second numerology is applied to the second system; and
   receiving, from the UE, in the second system the second numerology applied, a first uplink signal with a timing is adjusted by a time obtained by applying the uplink adjustment parameter to the uplink timing advance command.

2. The method of claim 1, wherein the uplink timing advance command is transmitted in a medium access control (MAC) message.

3. The method of claim 1, wherein the information on scheduling the uplink transmission in the second system and the uplink timing adjustment parameter for the uplink timing advance command in the second system are transmitted through uplink scheduling downlink control information (DCI).

4. The method of claim 1, wherein the time obtained by applying the uplink adjustment parameter to the uplink timing advance command corresponds to a time indicated by a sum of first time information obtained by applying the uplink timing advance command to the first system and second time information obtained by applying the uplink timing advance command to the second system,

5. The method of claim 1, wherein the time obtained by applying the uplink adjustment parameter for the uplink timing advance command corresponds to a time determined by a multiplication of time information obtained by applying the uplink timing advance command to the first system and information indicated by the uplink timing adjustment parameter.

6. The method of claim 1, further comprising receiving, from the UE, a second uplink signal in the first system, wherein the uplink timing advance command comprises an uplink timing advance value determined based on the second uplink signal.

7. The method of claim 6, wherein the second uplink signal is one of a sounding reference signal, a physical uplink control channel (PUCCH) signal, or a physical uplink shared channel (PUSCH) signal.

8. The method of claim 1, wherein the first numerology is different from the second numerology.

9. The method of claim 1, wherein the first system is a new radio access technology (new RAT or NR) system, and wherein the second system is a long term evolution (LTE) system.

10. A method of transmitting an uplink signal to a base station by a user equipment (UE) in a wireless communication system, the method comprising:

receiving, from the base station, an uplink timing advance command in a first system, wherein a first numerology is applied to the first system;
receiving, from the base station, in the first system the first numerology applied, information on scheduling uplink transmission in a second system and an uplink timing adjustment parameter for the uplink timing advance command in the second system, wherein a second numerology is applied to the second system; and
transmitting, to the base station, in the second system the second numerology applied, a first uplink signal with a timing is adjusted by a time obtained by applying the uplink adjustment parameter for the uplink timing advance command.

11. A base station for receiving an uplink signal from a user equipment (UE) in a wireless communication system, the base station comprising:

a transmitter;
a receiver; and
a processor coupled with the transmitter and the receiver,
wherein the processor is configured to:

transmit, to the UE, an uplink timing advance command in a first system, wherein a first numerology is applied to the first system;
transmit, to the UE, in the first system the first numerology applied, information on scheduling uplink transmission in a second system and an uplink timing adjustment parameter for the uplink timing advance command in the second system, wherein a second numerology is applied to the second system; and
receive, from the UE, in the second system the second numerology applied, a first uplink signal with a timing is adjusted by a time obtained by applying the uplink adjustment parameter to the uplink timing advance command.

12. A user equipment (UE) for transmitting an uplink signal to a base station in a wireless communication system, the UE comprising:

a transmitter;
a receiver; and
a processor coupled with the transmitter and the receiver,
wherein the processor is configured to:

receive, from the base station, an uplink timing advance command in a first system, wherein a first numerology is applied to the first system;
receive, from the base station, in the first system the first numerology applied, information on scheduling uplink transmission in a second system and an uplink timing adjustment parameter for the uplink timing advance command in the second system, wherein a second numerology is applied to the second system; and
transmit, to the base station, in the second system the second numerology applied, a first uplink signal with a timing is adjusted by a time obtained by applying the uplink adjustment parameter for the uplink timing advance command.

## FIG. 1

Initial Cell Search | System Information Reception | Random Access Procedure | General DL/UL Tx/Rx
S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11　　　　S12　　　　S13　S14　　　S15　S16　　　S17　• DL/UL ACK/NACK
• UE CQI/PMI/Rank Report
using PUSCH and PUCCH

# FIG. 2

One radio frame,$T_f$=307200$T_s$= 10ms

One slot, $T_{slot}$ = 15360$T_s$ = 0.5ms

| #0 | #1 | #2 | ... | #18 | #19 |
|----|----|----|-----|-----|-----|

One subframe

(a)

One radio frame,$T_f$=307200$T_s$= 10ms

One half frame, 153600$T_s$ = 5ms

One slot, $T_{slot}$ =15360$T_s$

30720$T_s$

| Subframe#0 | | | | Subframe#2 | Subframe#3 | Subframe#4 | Subframe#5 | | | | Subframe#7 | Subframe#8 | Subframe#9 |
|---|---|---|---|---|---|---|---|---|---|---|---|---|---|

One subframe, 30720$T_s$

DwPTS    GP    UpPTS

DwPTS    GP    UpPTS

(b)

EP 3 582 572 A1

# FIG. 3

One downlink slot

7 OFDM symbols

$N^{DL} \times 12$ Sub-carriers

12 Sub-carriers

Resource block
12×7 Resource element

Resource element

# FIG. 4

Control region

Data region

RB pair

One slot

One slot

Subframe

Frequency

Time

# FIG. 5

Control region          Data region

First slot          Second slot

One subframe

Frequency

Time

# FIG. 6

DL only or UL only

DL Control channel

UL Control channel

FIG. 7

FIG. 8

FIG. 9

EP 3 582 572 A1

# FIG. 10

33

# FIG. 11

(a) Scenario in which LTE and NR services are provided at different sites

(b) Scenario in which LTE and NR services are provided at same site

# FIG. 12

subframe (1ms)

even-numbered slot    odd-numbered slot

control region        blank resource
for LTE               for NR

(a) Blank resource except CRS and control region of LTE DL or special subframe

subframe (1ms)

even-numbered slot    odd-numbered slot

control region        blank resource
for LTE               for NR

(b) Blank resource except control region of LTE DL subframe

subframe (1ms)

even-numbered slot    odd-numbered slot

blank resource
for NR

(c) Blank resource configured using LTE UL subframe or small cell off region

# FIG. 13

(a) Method of using CRS in corresponding or previous subframe

(b) Method of using CRS in previous subframe

FIG. 14

FIG. 15

**User equipment(1)**

Transmitter — 10
Memory — 50
Receiver — 20
Processor — 40

**Base station(100)**

Transmitter — 110
Memory — 150
Receiver — 120
Processor — 140

130

# EP 3 582 572 A1

## INTERNATIONAL SEARCH REPORT

| | International application No. |
|---|---|
| | **PCT/KR2018/001744** |

**A. CLASSIFICATION OF SUBJECT MATTER**

*H04W 72/12(2009.01)i, H04W 56/00(2009.01)i*

According to International Patent Classification (IPC) or to both national classification and IPC

**B. FIELDS SEARCHED**

Minimum documentation searched (classification system followed by classification symbols)
H04W 72/12; H04W 36/04; H04W 56/00; H04W 36/30; H04W 72/04; H04W 48/20

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: NR, LTE, TA, timing, advance, command, parameter, uplink

**C. DOCUMENTS CONSIDERED TO BE RELEVANT**

| Category* | Citation of document, with indication, where appropriate, of the relevant passages | Relevant to claim No. |
|---|---|---|
| Y | US 2016-0302129 A1 (PANASONIC INTELLECTUAL PROPERTY CORPORATION OF AMERICA) 13 October 2016 See paragraphs [0013], [0130], [0133], [0350], [0454], [0554]; and figure 9. | 1-3,6-12 |
| A | | 4-5 |
| Y | ZTE et al., "Discussion on NR-LTE Co-existence", R1-1701618, 3GPP TSG RAN WG1 Meeting #88, Athens, Greece, 06 February 2017 See section 3. | 1-3,6-12 |
| A | PANASONIC, "Scheduling Considerations for Dynamic Resource Sharing among Numerologies in NR", R1-1612798, 3GPP TSG RAN WG1 Meeting #87, Reno, USA, 04 November 2016 See section 2. | 1-12 |
| A | KR 10-2017-0000296 A (SAMSUNG ELECTRONICS CO., LTD. et al.) 02 January 2017 See paragraphs [0020], [0039], [0054]; and figure 1. | 1-12 |
| A | US 2016-0021648 A1 (BLACKBERRY LIMITED) 21 January 2016 See paragraphs [0038]-[0049]; and figure 1. | 1-12 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 MAY 2018 (11.05.2018) | **11 MAY 2018 (11.05.2018)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/001744**

| Patent document cited in search report | Publication date | Patent family member | Publication date |
|---|---|---|---|
| US 2016-0302129 A1 | 13/10/2016 | EP 2498556 A1 | 12/09/2012 |
| | | EP 2557867 A1 | 13/02/2013 |
| | | EP 2622915 A2 | 07/08/2013 |
| | | EP 2684402 A1 | 15/01/2014 |
| | | JP 2013-545329 A | 19/12/2013 |
| | | JP 2014-511640 A | 15/05/2014 |
| | | JP 2015-222985 A | 10/12/2015 |
| | | JP 2016-149788 A | 18/08/2016 |
| | | JP 2017-143550 A | 17/08/2017 |
| | | JP 5789668 B2 | 07/10/2015 |
| | | JP 5908504 B2 | 26/04/2016 |
| | | JP 6117294 B2 | 19/04/2017 |
| | | US 2013-0250925 A1 | 26/09/2013 |
| | | US 2014-0029586 A1 | 30/01/2014 |
| | | US 2016-0227505 A1 | 04/08/2016 |
| | | US 9344985 B2 | 17/05/2016 |
| | | US 9402255 B2 | 26/07/2016 |
| | | US 9749927 B2 | 29/08/2017 |
| | | US 9756594 B2 | 05/09/2017 |
| | | WO 2012-041422 A2 | 05/04/2012 |
| | | WO 2012-041422 A3 | 14/06/2012 |
| | | WO 2012-042736 A1 | 05/04/2012 |
| | | WO 2012-119626 A1 | 13/09/2012 |
| KR 10-2017-0000296 A | 02/01/2017 | WO 2016-209002 A1 | 29/12/2016 |
| US 2016-0021648 A1 | 21/01/2016 | CA 2918664 A1 | 05/02/2015 |
| | | EP 2997785 A1 | 23/03/2016 |
| | | EP 2997785 A4 | 29/06/2016 |
| | | HK 1222500 A1 | 30/06/2017 |
| | | US 2015-0036666 A1 | 05/02/2015 |
| | | US 2018-0020439 A1 | 18/01/2018 |
| | | US 9844051 B2 | 12/12/2017 |
| | | WO 2015-013818 A1 | 05/02/2015 |

Form PCT/ISA/210 (patent family annex) (January 2015)